# EUROPEAN PATENT APPLICATION

(11) **EP 4 715 723 A1**
(43) Date of publication of application: **25.03.2026**
(21) Application number: 23942442.7
(22) Date of filing: 23.06.2023
(51) Int. Cl.: G06Q 50/06

(54) **INFORMATION MANAGEMENT DEVICE, INFORMATION MANAGEMENT METHOD, AND PROGRAM**

(71) Applicant: HONDA MOTOR CO., LTD., Tokyo 105-8404 (JP)
(72) Inventor: KIMURA, Toru, 63073 Offenbach am Main (DE); KOPP, Martin, 63073 Offenbach am Main (DE); KOEBEL, Christian, 63073 Offenbach am Main (DE)
(74) Representative: Kiwit, Benedikt
(86) International application number: PCT/JP2023/023344
(87) International publication number: WO 2024/262011

(57) **Abstract**

An information management device of an embodiment that mediates a transaction between users and manages a transaction result by storing a smart contract regarding the transaction on a blockchain includes an acquirer configured to acquire a request regarding buying or selling received from a user, a matcher configured to perform matching a new request newly acquired by the acquirer and an existing request included in a smart contract already stored on the blockchain, and a processor configured to generate a smart contract including the new request on the blockchain when the matching is not established, and add, when the matching is established, information regarding the new request to a smart contract including the matched existing request.

## Description

### TECHNICAL FIELD

The present invention relates to an information management device, an information management method, and a program.

### BACKGROUND ART

In recent years, a technique for registering information using a blockchain has been researched. In this context, to suppress a frequency of recording of transaction information regarding a transaction, a technique for collectively storing information on a blockchain network in each of predetermined periods is known (for example, see Patent Document 1).

### Citation List

### Patent Document

Patent Document 1: Japanese Unexamined Patent Application, First Publication No. 2022-46757

### SUMMARY OF INVENTION

### Technical Problem

However, as in the related art, when information is stored in each predetermined period, while cost of a data volume on a blockchain, or the like is reduced, a time lag with respect to an actual transaction situation occurs. For this reason, there is a problem in that each piece of information cannot be accurately managed.

To solve the above-described problem, an object of the present application is to provide an information management device, an information management method, and a program capable of more accurately managing information while reducing a data volume of information that is stored on a blockchain.

### Solution to Problem

An information management device, an information management method, and a program according to the invention employ the following configurations.
(1) An information management device according to an aspect of the invention is an information management device that mediates a transaction between users and manages a transaction result by storing a smart contract regarding the transaction on a blockchain, and includes an acquirer configured to acquire a request regarding buying or selling received from a user, a matcher configured to perform matching between a new request newly acquired by the acquirer and an existing request included in a smart contract already stored on the blockchain, and a processor configured to generate a smart contract including the new request on the blockchain when the matching is not established, and add, when the matching is established, information regarding the new request to a smart contract including the matched existing request.
(2) In the aspect of (1) described above, the processor generates a smart contract including information regarding the new request changed into a hash value.
(3) In the aspect of (1) described above, the processor generates the smart contract including the new request by a program stored in advance on the blockchain.
(4) In the aspect of (3) described above, the blockchain is Ethereum.
(5) In the aspect of (1) described above, the transaction includes a power transaction, the request includes a request regarding buying or selling of power, and the processor adds a power transaction result for the request to the smart contract.
(6) In the aspect of (1) described above, the smart contract includes at least one of information regarding the user, a transaction type, information regarding a token that is exchanged after transaction completion, and information for referring to information regarding the request that is recorded in a storage outside the blockchain.
(7) In the aspect of (1) described above, the processor stores session information in the transaction between the users on the blockchain while changing into a hash value, and stores transaction information regarding a transaction amount and a transaction volume on the blockchain without changing into a hash value.
(8) An information management method according to an aspect of the invention is an information management method including, by an information management device that mediates a transaction between users and manages a transaction result by storing a smart contract regarding the transaction on a blockchain, acquiring a request regarding buying or selling received from a user, performing matching between a new request newly acquired and an existing request included in a smart contract already stored on the blockchain, generating a smart contract including the new request on the blockchain when the matching is not established, and adding, when the matching is established, information regarding the new request to a smart contract including the matched existing request.
(9) A program according to an aspect of the invention is a program causing an information management device, which mediates a transaction between users and manages a transaction result by storing a smart contract regarding the transaction on a blockchain, to acquire a request regarding buying or selling received from a user, perform matching between a new request newly acquired and an existing request included in a smart contract already stored on the blockchain, generate a smart contract including the new request on the blockchain when the matching is not established, and add, when the matching is established, information regarding the new request to a smart contract including the matched existing request.

### Advantageous Effects of Invention

According to the aspects of (1) to (9) described above, it is possible to more accurately manage information while reducing a data volume of information that is stored on the blockchain.

### BRIEF DESCRIPTION OF DRAWINGS

[FIG. 1] A configuration diagram of a transaction system 1 using an information management device of an embodiment.
[FIG. 2] A configuration diagram of an information management device 100 of the embodiment.
[FIG. 3] A configuration diagram of a user terminal 200 of the embodiment.
[FIG. 4] A sequence diagram illustrating a series of flow of a power transaction in the embodiment.
[FIG. 5] A diagram showing an example of an image IM10 that is displayed on the user terminal 200 in request generation processing.
[FIG. 6] A flowchart illustrating an example of matching processing and generation processing of a smart contract in a first example.
[FIG. 7] A diagram illustrating a request that is received from each user U in the first example.
[FIG. 8] A diagram illustrating a smart contract SC that is stored on a blockchain 300 in the first example.
[FIG. 9] A diagram showing an example of a specific configuration of a processor 140 in a second example.
[FIG. 10] A flowchart illustrating an example of matching processing and generation processing of a smart contract SC in the second example.
[FIG. 11] A diagram illustrating a request of each user U and a smart contract SC stored on the blockchain 300 in the second example.
[FIG. 12] A flowchart illustrating an example of matching processing and generation processing of a smart contract SC in a third example.
[FIG. 13] A diagram illustrating a request of each user U and a smart contract SC stored on the blockchain 300 in the third example.
[FIG. 14] A diagram showing an example of an image IM20 regarding a matching result.
[FIG. 15] A diagram illustrating processing regarding a power transaction.
[FIG. 16] A diagram showing an image IM30 regarding a power transaction situation.
[FIG. 17] A diagram illustrating management of a transaction situation during a charging/discharging session.
[FIG. 18] A flowchart illustrating an example of processing that is executed by the information management device 100 during a charging/discharging session.

### DESCRIPTION OF EMBODIMENTS

Hereinafter, an embodiment of an information management device, an information management method, and a program of the present invention will be described with reference to the drawings. In the following description, an example where the information management device is applied to a transaction system (interpersonal transaction system) that performs a transaction between users will be described. In the following description, although a power transaction is used as an example of the transaction, the transaction may include a credit transaction or a transaction of other products or services may be used instead of (or in addition to) the power transaction.

### [Overall Configuration]

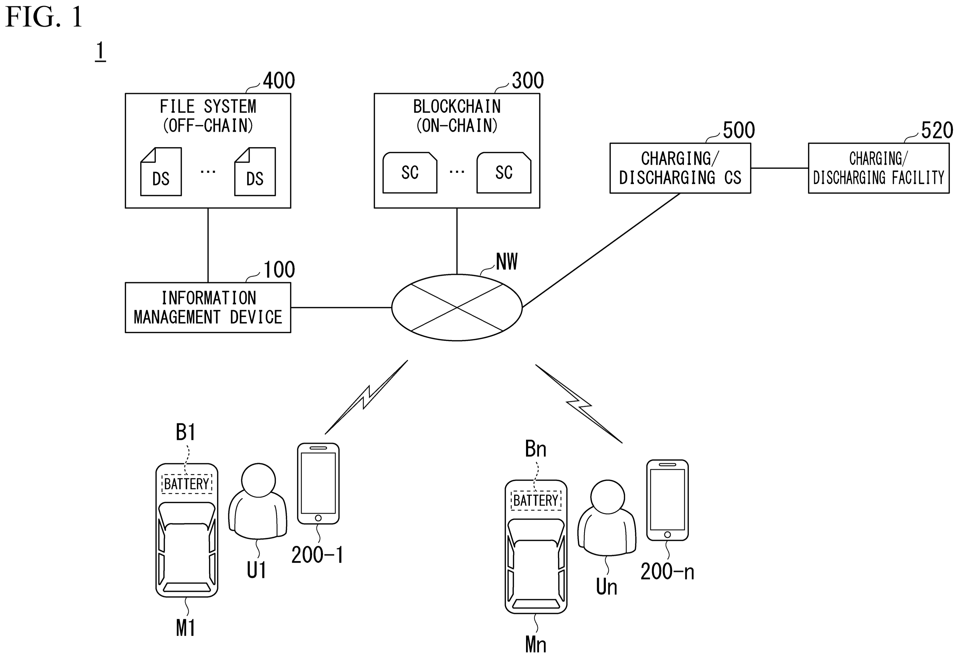

FIG. 1 is a configuration diagram of a transaction system 1 using an information management device of the embodiment. The transaction system 1 includes, for example, an information management device 100, one or more user terminals 200-1 to 200-n, a blockchain 300, a file system 400, a charging/discharging control system (hereinafter, referred to as a charging/discharging CS) 500, and a charging/discharging facility 520. The information management device 100, the user terminal 200, the blockchain 300, and the charging/discharging CS 500 can perform communication with each other via, for example, a network NW. The network NW includes, for example, a cellular network, a Wi-Fi network, Bluetooth (Registered Trademark), the Internet, a wide area network (WAN), a local area network (LAN), a public line, a provider device, a dedicated line, and a wireless base station. The file system 400 is an example of a "storage".

The information management device 100 may be, for example, a server device or a personal computer (PC) or may be a cloud server configured by cloud computing composed of one or more information processing devices. The information management device 100 may has a function as an edge server that performs processing on data stored on the blockchain 300 or the file system 400. The information management device 100 mediates an interpersonal transaction between users. For example, the information management device 100 generates information (for example, smart contract SC) regarding a power transaction that is stored on the blockchain 300 or generates information (for example, data set DS) regarding a power transaction that is stored in the file system 400.

The user terminal 200 is a device that is used by a user U (customer), and is, for example, a smartphone, a tablet terminal, or a PC. The user terminal 200 receives a request (for example, buying request or power selling request) regarding a transaction input by the user U and transmits the received request to the information management device 100. The user terminal 200 receives information regarding a power transaction by the information management device 100 and provides information to the user U by image display or voice output. In the example of FIG. 1, a transaction regarding power of a battery B mounted in an electrified vehicle M that the user U possesses is performed. The electrified vehicle M is, for example, a battery electric vehicle (BEV) that travels using a motor (electric motor), which is driven with power supplied from the battery B. Alternatively, the electrified vehicle may be a plug-in hybrid vehicle (PHV) or a plug-in hybrid electric vehicle (PHEV) that is a hybrid vehicle equipped with an external charging function. The electrified vehicle M includes, for example, not only a four-wheeled vehicle but also all "mobile objects" that travel using a motor, which is driven with power supplied from a battery, such as a saddle-type two-wheeled vehicle, a three-wheeled vehicle (including a vehicle with two front wheels and one rear wheel in addition to a vehicle with one front wheel and two rear wheels), an assist type bicycle, and an electric kick scooter.

The blockchain 300 is a data store (database) that manages information regarding a transaction in units called blocks and clarifies and stores an anteroposterior relationship (ordering) in connection with the information. The blockchain 300 may be a blockchain network that is configured by a plurality of devices (nodes) accessible to each other. The blockchain 300 is, for example, Ethereum. Ethereum is a decentralized application platform that can manage a program or the operation of the program on the blockchain 300 with a smart contract SC as a block. In the embodiment, it is possible to assure the safety of a transaction using Ethereum having high unfalsification and reliability among public blockchains.

In the smart contract SC, for example, data such as request information regarding a power transaction or power transaction information is stored as a transaction. In the transaction, software (computer program) that is automatically executed when a predetermined condition is satisfied may be included in addition to the above-described information. Further, in the smart contract SC, a hash value generated on the basis of a previous (last) block (transaction) is included. In newly adding data to the smart contract SC, for example, data can be stored in the smart contract SC in connection with a past block by hashing a new block including a hash value of a previous block, data (for example, transaction data) to be stored, a nonce value (for example, inputting the above-described block to a hash function and calculating a hash value) and storing the calculated hash value and the block.

Processing of generating and storing (saving) the smart contract SC on the blockchain 300 can be executed by a node and the information management device 100 connected to the blockchain 300. Further, in the blockchain 300, a plurality of terminals can save the smart contract SC and perform comparison and the like. In the following description, the blockchain 300 may be referred to as an "on-chain".

The file system 400 is, for example, a peer to peer (P2P) type distributed file system based on an inter planetary file system (IPFS). The file system 400 may be an IPFS network configured by a plurality of devices (nodes) accessible to each other. The file system 400 stores a data set (electronic data) DS including information regarding a power transaction. The file system 400 is connected to the information management device 100 and manages the data set DS that is stored by the information management device 100. A secure environment is established such that the user terminal 200 or the like cannot directly refer to the data set DS via the network NW. For this reason, data that is stored in the file system 400 may not be changed into hash values. In the following description, the file system 400 may be referred to as an "off-chain" or "backend".

The charging/discharging CS 500 manages charging or discharging the battery B of the electrified vehicle M connected to the charging/discharging facility 520. The charging/discharging facility 520 is connected to the electrified vehicle M to supply power to the battery B of the electrified vehicle M and charge the battery B or supply power discharged from the battery B to the outside. The charging/discharging CS 500 manages position information of a plurality of charging/discharging facilities 520 provided at respective places, a charging/discharging schedule of the electrified vehicle M, and the like. The charging/discharging CS 500 may perform control regarding charging/discharging on the basis of control information from the information management device 100 or may transmit a charging/discharging result to the information management device 100. Next, the configurations of the information management device 100 and the user terminal 200 will be specifically described.

### [Information Management Device]

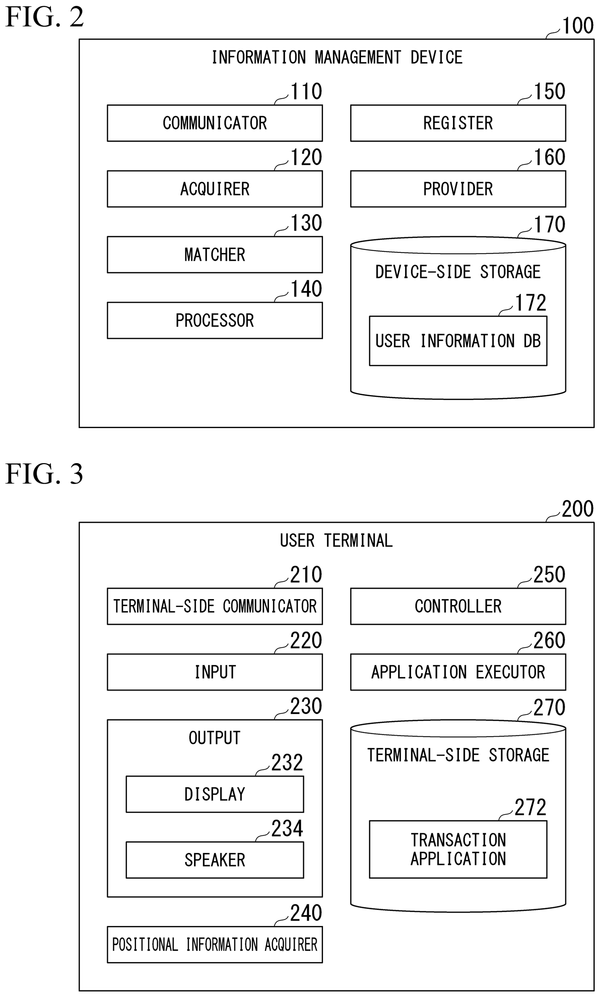

FIG. 2 is a configuration diagram of the information management device 100 of the embodiment. The information management device 100 includes, for example, a communicator 110, an acquirer 120, a matcher 130, a processor 140, a register 150, a provider 160, and a device-side storage 170. The acquirer 120, the matcher 130, the processor 140, the register 150, and the provider 160 are implemented, for example, by a hardware processor such as a central processing unit (CPU) executing a program (software). A part or all of these components may be implemented by hardware (circuit unit; circuitry) such as a large scale integration (LSI) or an application specific integrated circuit (ASIC), a field-programmable gate array (FPGA), or a graphics processing unit (GPU) or may be implemented by software and hardware in cooperation. The program may be stored in advance in a storage device (a storage device including a non-transitory storage medium) such as a hard disk drive (HDD) of the information management device 100 or a flash memory or may be stored in a removable storage medium (a non-transitory storage medium) such as a DVD or a CD-ROM and may be installed on the HDD of the information management device 100 or the flash memory when the storage medium is loaded into a drive device of the information management device 100.

The device-side storage 170 may be implemented by various storage devices described above or a solid state drive (SSD), an electrically erasable programmable read only memory (EEPROM), a read only memory (ROM), a random access memory (RAM), or the like. In the device-side storage 170, for example, a user information database (DB) 172, a processing result of the information management device 100, programs, and various other kinds of information are stored. In the user information DB 172, for example, information (for example, user ID or address information of the user U) regarding the user U who uses the transaction system 1, information (for example, terminal ID) regarding the user terminal 200 that the user U uses, and information (for example, vehicle ID) regarding the electrified vehicle M that the user U uses are associated with each other. The terminal ID, the vehicle ID, and the like may be a media access control (MAC) address that is allocated to each device. In the user information DB 172, one or more user terminals 200 may be associated with each user U or one or more electrified vehicles M may be associated with each user U.

The communicator 110 performs communication with the user terminal 200, the blockchain 300, the charging/discharging CS 500, and other external devices via the network NW. The communicator 110 performs communication with the file system 400 by a dedicated line or the like, for example.

The acquirer 120 acquires information regarding the user U who uses a service in the transaction system 1, on the basis of information received by the communicator 110. The acquirer 120 acquires a request regarding buying or selling from the user U or acquires information regarding a situation of charging/discharging (power transaction) of power from the charging/discharging CS 500 or a transaction result.

The matcher 130 performs matching between a new request (received request) newly acquired by the acquirer 120 and an existing request stored in a smart contract SC already stored on the blockchain 300 before generation of a blockchain 300 to be stored on the smart contract SC.

The processor 140 generates a smart contract SC including the new request when the matching of the new request and the existing request is not established by the matcher 130. When the matching is established, the processor 140 adds information regarding the new request to the smart contract SC including the matched existing request. In the embodiment, "add" may include that part of information in the smart contract SC is changed, edited, deleted, or updated. Details of the function of the processor 140 will be described below.

The register 150 stores (registers) the smart contract SC generated by the processor 140 on the blockchain 300. The processor 140 may generate the smart contract SC on the blockchain 300 not through the register 150.

The register 150 may manage the registration of the user U who uses the service provided by the transaction system 1. In this case, the register 150 performs new registration of the user U to register new user information in the user information DB 172. The register 150 performs control of comparing identification information of the user U or the user terminal 200 that accesses the transaction system 1 to use the service with identification information registered in the user information DB 172, permits the use of the service when the matching identification information is registered, and rejects the use of the service when the identification information is not registered.

The provider 160 provides various kinds of information to the user terminal 200 or the charging/discharging CS 500. For example, the provider 160 generates information (image, voice) regarding a matching result of the matcher 130 and provides the generated information to the user terminal 200. The provider 160 provides information regarding the electrified vehicle M or the user U that performs charging/discharging, to the charging/discharging CS 500 when the matching is established by the matcher 130.

### [User Terminal]

FIG. 3 is a configuration diagram of the user terminal 200 of the embodiment. The user terminal 200 includes, for example, a terminal-side communicator 210, an input 220, an output 230, a position information acquirer 240, a controller 250, an application executor 260, and a terminal-side storage 270. The position information acquirer 240, the controller 250, and the application executor 260 are implemented, for example, by a hardware processor such as a CPU executing a program (software). A part or all of these components may be implemented by hardware (circuit unit; circuitry) such as an LSI, an ASIC, an FPGA, or a GPU or may be implemented by software and hardware in cooperation. The program may be stored in advance in a storage device (a storage device including a non-transitory storage medium) such as an HDD of the user terminal 200 or a flash memory or may be stored in a removable storage medium (non-transitory storage medium) such as a DVD or a CD-ROM and may be installed on the HDD of the user terminal 200 or the flash memory when the storage medium is loaded into a drive device of the user terminal 200.

The terminal-side storage 270 may be implemented by various storage devices described above or an SSD, an EEPROM, a ROM, a RAM, or the like. In the terminal-side storage 270, for example, a transaction application 272, a processing result of the user terminal 200, a program, and various other kinds of information are stored.

The terminal-side communicator 210 performs communication with the information management device 100 and other external devices, for example, via the network NW. The terminal-side communicator 210 may perform communication with the electrified vehicle M that the user U uses, by short-range communication.

The input 220 receives an input of the user U, for example, by an operation of various keys or buttons. The input 220 may include, for example, a microphone and receive a voice input of the user U.

The output 230 includes, for example, a display 232 or a speaker 234. The display 232 is, for example, a liquid crystal display (LCD) or an organic electroluminescence (EL) display. The output 230 displays various images on the display 232 or performs voice output from the speaker 234 under the control of the controller 250 or the application executor 260. The display 232 may also have the function of the input 220 as a touch panel.

The position information acquirer 240 acquires position information (for example, latitude/longitude information) of the user terminal 200 by an embedded global positioning system (GPS) device.

The controller 250 controls all of various components of the user terminal 200. The controller 250 stores information received by the input 220 in the terminal-side storage 270 or transmits information to the information management device 100 via the terminal-side communicator 210. The controller 250 may output, for example, information such as an image or voice acquired from the information management device 100 via the terminal-side communicator 210, from the output 230 or may generate an image or voice on the basis of information acquired from the information management device 100 and may output the image or voice from the output 230.

The application executor 260 is implemented when the transaction application 272 stored in the terminal-side storage 270 is executed. The transaction application 272 is downloaded, for example, from an external device via the network NW and is installed on the user terminal 200. The transaction application 272 transmits information (request information) input by the input 220, the position information acquired by the position information acquirer 240, the identification information of the user terminal 200, the user information, and the like to the information management device 100 or acquires information regarding a request result or the like or information regarding a power transaction and output the acquired information to the output 230.

### [Flow of Power Transaction]

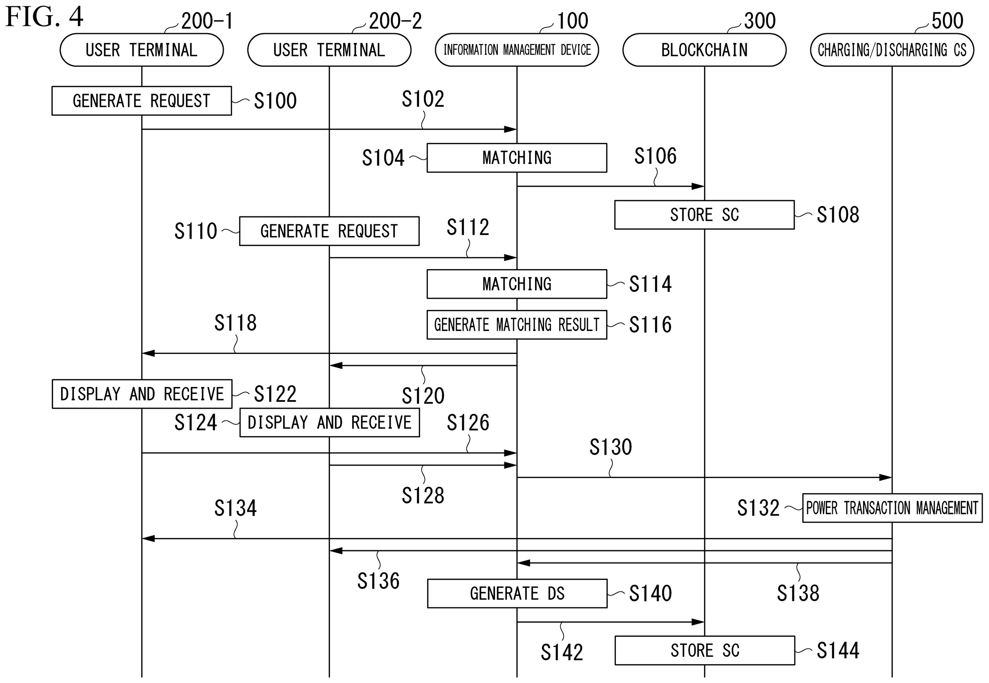

Next, a flow of a power transaction using the transaction system 1 of the embodiment will be specifically described. FIG. 4 is a sequence diagram illustrating a series of flow of a power transaction in the embodiment. In FIG. 4, as an example, processing in a user terminal 200-1 that a user U1 uses, a user terminal 200-2 that a user U2 uses, the information management device 100, the blockchain 300, and the charging/discharging CS 500 is illustrated. It is assumed that both the users U1 and U2 are users who can use the provision of the service of the transaction system 1 (users who are permitted to use the service by the register 150). In the following description, an example where a power interchange transaction is performed between a battery B1 mounted in an electrified vehicle M1 that the user U1 uses and a battery B2 mounted in an electrified vehicle M2 that the user U2 uses will be described.

In the example of FIG. 4, the transaction application 272 of the user terminal 200-1 generates a request regarding a power transaction on the basis of information input by the user U1 (Step S100), and transmits the generated request to the information management device 100 (Step S102).

The matcher 130 of the information management device 100 receives the request transmitted from the user terminal 200-1 and performs matching with another request (existing request) included in a smart contract SC already stored on the blockchain 300 on the basis of the received request (new request) (Step S104). In the processing of Step S104, it is assumed that the matching is unestablished (there is no existing request matching the condition of the new request). In this case, the processor 140 of the information management device 100 generates a smart contract SC including the new request in the blockchain 300 and transmits the generated smart contract SC to the blockchain 300 (Step S106), and stores the smart contract (SC) on the blockchain 300 (Step S108).

Next, the user U2 starts the transaction application 272 using the user terminal 200-2, and inputs a request regarding a power transaction similarly to the user U1. The user terminal 200-2 generates a request on the basis of input information (Step S110), and transmits the generated request information to the information management device 100 (Step S112).

The matcher 130 acquires the request (new request) transmitted from the user terminal 200-2, and performs matching with an existing request with reference to the smart contract SC stored on the blockchain 300 (Step S114). Hereinafter, description will be continued assuming that matching is established with the requests of the user U1 and the user U2. The provider 160 of the information management device 100 generates information (for example, image) regarding a matching result (Step S116), and transmits the generated information to the user terminals 200-1 and 200-2 (Steps S118 and S120).

The user terminals 200-1 and 200-2 display information regarding the matching result transmitted from the information management device 100 and receive instruction information and the like from the users U1 and U2, respectively (Steps S122 and S124). Information from the users U1 and U2 may be information regarding whether the power transaction by the matching result is approved or rejected or when there are a plurality of targets matching the condition, may be the content indicating that any target is selected. The user terminals 200-1 and 200-2 transmit information obtained from the users U1 and U2 to the information management device 100, respectively (Steps S126 and S128).

The information management device 100 acquires information from the user terminals 200-1 and 200-2, and when the matching is approved, outputs information (for example, information regarding the users U1 and U2 or the electrified vehicles M1 and M2 that perform the power transaction) regarding the power transaction to the charging/discharging CS 500 (Step S130). The charging/discharging CS 500 performs power transaction management on the basis of information acquired from the information management device 100 (Step S132). Specifically, the charging/discharging facility 520 to which the target electrified vehicle M is connected is set, and information such as position information or available hours (schedule) of the set charging/discharging facility 520 is transmitted to the user terminals 200-1 and 200-2 (Steps S134 and S136). Information such as the schedule in which the power transaction is performed may be provided from the information management device 100.

The charging/discharging CS 500 also performs processing regarding power transaction management other than Steps S134 and S136. For example, the charging/discharging CS 500 transmits information regarding the users U1 and U2 and the electrified vehicles M1 and M2 that use the charging/discharging facility 520, to the charging/discharging facility 520 and performs an advance reservation to prevent other electrified vehicles M from using the charging/discharging facility 520 at a reservation time. Further, the charging/discharging CS 500 manages a discharging situation and a charging situation on the basis of information obtained from the charging/discharging facility 520. For example, when the user U1 is a side (seller) to sell power, and the user U2 is a side (buyer) to buy power, the charging/discharging facility 520 that is connected to the electrified vehicle M2 receives power discharged from the battery B1 of the electrified vehicle M1 of the user U1 and supplies the received power to the battery B2 of the electrified vehicle M2 via the charging/discharging facility 520 to which the electrified vehicle M2 is connected. These charging/discharging situations are managed at any time by the charging/discharging CS 500 on the basis of information from the charging/discharging facility 520.

The charging/discharging CS 500 may transmit information regarding a transaction situation to the user terminals 200-1 and 200-2. The charging/discharging facility 520 transmits information regarding a power transaction situation (charging/discharging situations) to the information management device 100 at a predetermined timing (Step S138). Information regarding the power transaction situation includes, for example, charging information (status data) indicating a situation during charging/discharging of the electrified vehicle M1 or M2, information (charging result) indicating charging/discharging completion, information (session end information) indicating the end of connection of the electrified vehicles M1 and M2 to the charging/discharging facility 520, and the like. The charging information is transmitted to the information management device 100 in a predetermined cycle, the charging result is transmitted at the time of charging completion, and the session end information is transmitted at the time of the end of connection of the charging/discharging facility 520 and the electrified vehicle M, to the information management device 100.

The processor 140 of the information management device 100 receives information regarding the power transaction situation from the charging/discharging CS 500 and generates the data set DS and the like in the file system 400 for the received information (Step S140). Further, the information management device 100 adds a charging session result (power transaction result) and the like to the smart contract SC including the existing request as a matching target stored on the blockchain 300 (Step S142), and stores the added smart contract SC (Step S144).

Next, details of each of processing of the flow of the power transaction described above will be described.

### [Request Generation Processing: Steps S100 and S110]

When each of the user terminals 200-1 and 200-2 generates a request, the transaction application 272 causes the user terminals 200-1 and 200-2 to display an image for inputting a request on the display 232. This image may be provided from the provider 160 of the information management device 100. Further, voice corresponding to the image may be output.

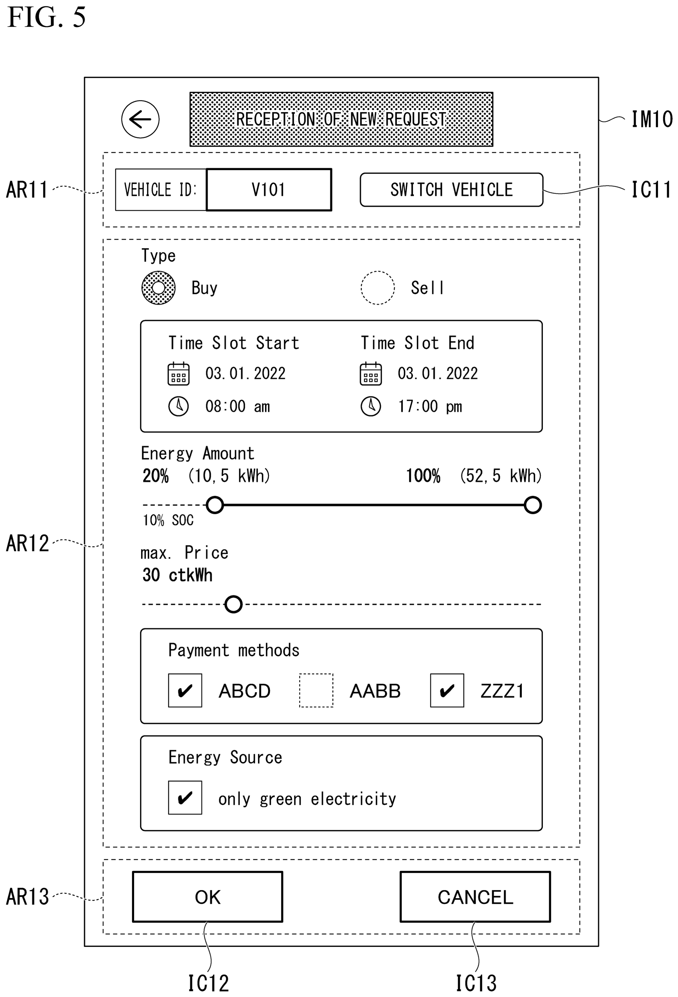

FIG. 5 is a diagram showing an example of an image IM10 that is displayed on the user terminal 200 in the request generation processing. The image IM10 shown in FIG. 5 is an image that is displayed on the user terminal 200-1 in the processing of Step S100 and is displayed on the user terminal 200-2 in the processing of Step S110. A display aspect such as the layout, character font, size, and display content of the image IM10 is not limited to the example of FIG. 5. The same applies other images described below. In the image IM10 shown in FIG. 5, for example, various input items for receiving a new request from the user U1 are included. In the image IM10 shown in FIG. 5, for example, a transaction target equipment information display area AR11, a transaction content display area AR12, and a switch display area AR13 are included.

In the transaction target equipment information display area AR11, information regarding target equipment that performs a transaction of power is displayed. When a power transaction of the battery B mounted in the electrified vehicle M is performed, an area where setting of identification information (for example, vehicle ID) for identifying the electrified vehicle M as a power transaction target is received is displayed in the transaction target equipment information display area AR11. In the transaction target equipment information display area AR11, an icon IC11 that is a graphical user interface (GUI) switch for selecting the vehicle ID may be displayed. When the user U1 selects the icon IC11, a list of vehicle IDs registered in advance is displayed, and the user U1 selects one from the displayed list, so that the vehicle ID is set.

In the transaction content display area AR12, input items where information such as a transaction type (buy or sell), a volume to be transacted (power volume), and a transaction price (buying price or selling price) is received are displayed. Further, in the transaction content display area AR12, information such as a transaction serviceable time (Time Slot), a token (for example, information (payment methods) regarding a payment token (crypto-assets) or information regarding other procedures) that is exchanged after transaction completion, and a type of power resource to be transacted (whether to limit to only green energy) may be included. These kinds of information may be set using a check box or a slide bar shown in FIG. 5, for example.

In the switch display area AR13, an icon IC12 and an icon IC13 that are GUI switches are included. The icon IC12 is a switch (OK switch) for receiving a new request, and the icon IC13 is a switch (CANCEL switch) for receiving non-registration of a new request.

When the icon IC12 is selected by the user U1, in the user terminal 200-1, the content input by the user U1 via the image IM10 is transmitted as new request information to the information management device 100. In the new request information, information (for example, user ID or address information of the user U) regarding the user U1, information regarding the user terminal 200, and the like may be included. The position information of the user terminal 200 may be transmitted in addition to (or instead of) the new request information.

### [Matching Processing and SC Generation Processing: Steps S104 to S108 and S114]

Next, the matching processing and the generation processing of the smart contract SC based on the matching result in Steps S104 to S108 and Step S114 will be described. In the following processing, generation processing of a smart contract SC with a request regarding a power transaction in each user terminal 200 as a transaction will be described in connection with several examples.

### (First Example)

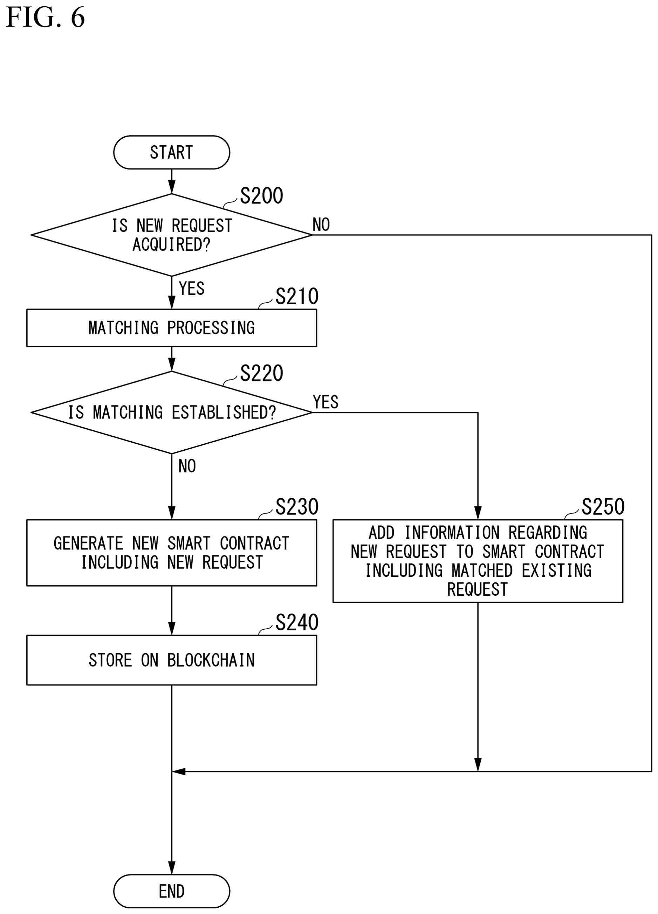

FIG. 6 is a flowchart illustrating an example of matching processing and generation processing of a smart contract in a first example. In the example of FIG. 6, the acquirer 120 determines whether a new request received from the user U is acquired (Step S200). When determination is made that the new request is acquired, the matcher 130 performs matching processing between the new request and an existing request included in a smart contract SC stored on the blockchain 300 (Step S210). Next, the processor 140 determines whether the matching is established by the matcher 130 (Step S220). When determination is made that the matching is not established (unestablished), the processor 140 generates a new smart contract including the new request (Step S230). Next, the register 150 stores the generated smart contract on the blockchain (Step S240). The new request saved in the smart contract may be changed into a hash value.

In the processing of Step S220, when determination is made that the matching is established, the processor 140 adds information regarding the new request to the smart contract stored on the blockchain 300 including the matched existing request (Step S250). As a result, the processing of this flowchart ends. In the processing of Step S200, when determination is made that the new request is not acquired, the processing of this flowchart ends.

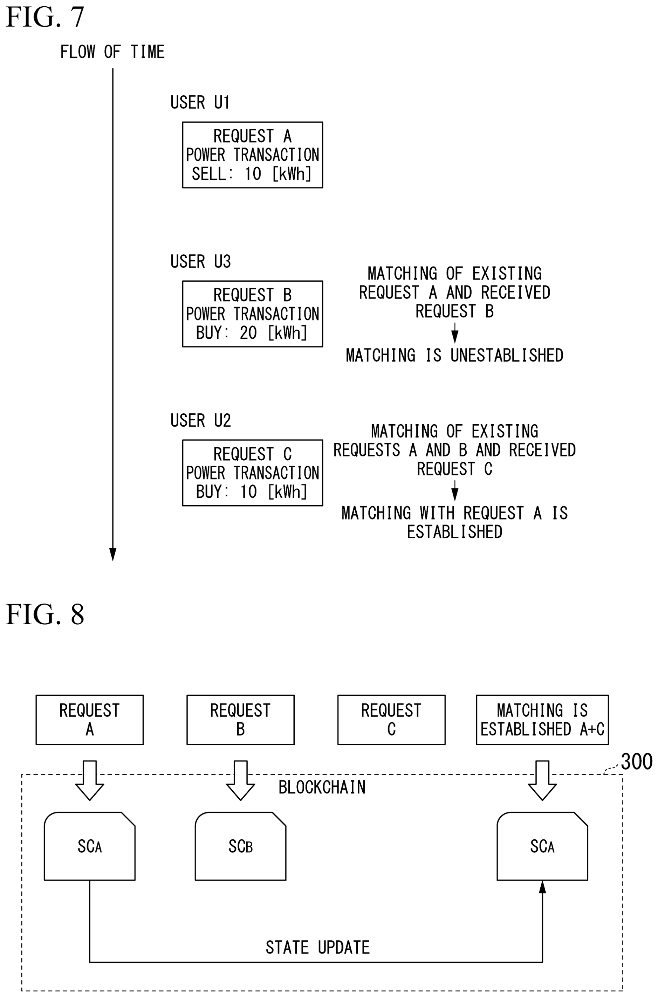

Next, the processing of the first example will be more specifically described. In the following example, for convenience of description, a case where there is a request from a user U3 in addition to the users U1 and U2 will be described. FIG. 7 is a diagram illustrating the request that is received from each user U in the first example. FIG. 8 is a diagram illustrating the smart contract SC that is stored on the blockchain 300 in the first example. In the example of FIG. 7, it is assumed that requests regarding a power transaction input from user terminals 200-1 to 200-3 that the users U1 to U3 use, respectively, are acquired, and it is assumed that the smart contract SC is not stored on the blockchain 300 in a stage before the users U1 to U3 input.

In the example of FIG. 7, the information management device 100 initially acquires a request A (power selling request) regarding a power transaction seeking to sell power 10 [kWh] from the user terminal 200-1 of the user U1. In the request A, information regarding a transaction price (selling price) may be included or other kinds of information set using the image IM10 may be included.

The matcher 130 performs matching between an existing request included in the smart contract SC already stored on the blockchain 300 and the request A that is a new request at this point of time. For example, the matcher 130 determines that the matching is established when there is a request (buying request) that satisfies a condition of seeking to buy 10 [kWh] or less of power among existing requests regarding a power transaction, and determines that the matching is unestablished when the condition is not satisfied. Because there is no smart contract SC (buying request) on the blockchain 300 yet, the matcher 130 determines that the matching is unestablished. Then, the processor 140 generates a new smart contract SC_{A} including the request A as shown in FIG. 7 and stores the smart contract SC_{A} on the blockchain 300. In the first example, for example, at least one kind of information among information regarding the user U who generates the request, a transaction type (power buying, power selling, or the like), and information regarding a token that is used (exchanged) after transaction completion is included in the smart contract SC_{A} including the request A. Further, in the smart contract SC that is generated by the processor 140, information regarding the request A is changed into a hash value and stored. With the request A being changed into a hash value, it is possible to suppress leakage or falsification of the request information and to further protect the request information.

The register 150 stores (registers) the generated smart contract SC_{A} on the blockchain 300 as shown in FIG. 7. At this point of time, the request A becomes an existing request.

Next, the information management device 100 acquires a request B (buying request) regarding a power transaction seeking to buy 20 [kWh] of power from the user terminal 200-3 of the user U3. The matcher 130 performs matching between the request A (existing request) that is included in the smart contract SC_{A} already stored on the blockchain 300 and the request B (new request). Because power seeking to buy in the request B is 20 [kWh] while power seeking to sell in the request A is 10 [kWh], the matcher 130 determines that the condition is not satisfied and the matching is unestablished.

The processor 140 generates a smart contract SC_{B} including the unmatched request B. The request information in this case may also be changed into a hash value. The register 150 stores the generated smart contract SC_{B} on the blockchain 300 as shown in FIG. 8. At this point of time, the request B becomes an existing request.

Next, the information management device 100 acquires a request C (buying request) regarding a power transaction seeking to buy 10 [kWh] of power from the user terminal 200-2 of the user U2. The matcher 130 performs matching between the requests A and B (both are existing requests) that are included in the smart contracts SC_{A} and SC_{B} already stored on the blockchain 300, respectively, and the request C (new request). Because 10 [kWh] of power seeking to buy in the request C matches 10 [kWh] of power seeking to sell in the request A, the matcher 130 determines that the matching of the request A and the request C is established.

In this case, as shown in FIG. 8, the processor 140 performs processing (state update processing) of adding only a state indicating that the matching of the request A and the request C is established, as information regarding the request C to the smart contract SC_{A} including the matched request A. Part of information regarding the request C may be added instead of (or in addition to) processing the processing. In this case, information to be added may be changed into a hash value.

According to the first example described above, because a new smart contract SCc including the request C is not generated on the blockchain, and a new smart contract SC_{A+C} including both the request A and the request C is not generated, it is possible to suppress an increase in the number of smart contracts SC (that is, data volume) that are stored on the blockchain 300, and in addition, to store finer and accurate information on the blockchain 300 with little time lag.

### (Second Example)

Next, a second example will be described. The second example is different from the first example in that request information is stored on the file system 400 other than the blockchain 300, and the smart contract SC is not generated by the processor 140 but is generated by a program on the blockchain 300 according to an instruction from the processor 140. Hereinafter, description will be provided primarily focusing on the differences.

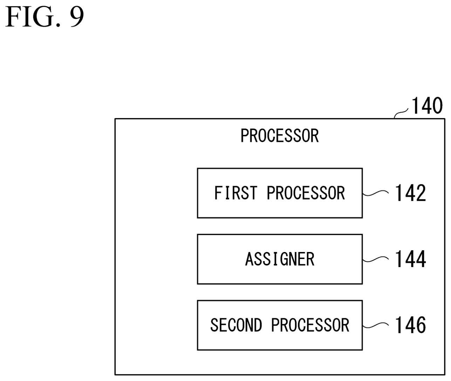

FIG. 9 is a diagram showing an example of a specific configuration of a processor 140 in the second example. The processor 140 includes, for example, a first processor 142, an assigner 144, and a second processor 146. The first processor 142 stores information regarding a new request in the file system 400 present outside the blockchain 300 without changing into a hash value. The assigner 144 assigns identification information (CID: content identifier) to information regarding the new request stored in the file system 400. The CID may be a hash value. For example, the assigner 144 performs hashing with information regarding the new request, or the like as an input value to calculate a hash value and assigns the hash value as the CID for the new request. The CID is used for management of a request (or data set DS) and reference, for example, in the information management device 100, the file system 400, or the like. When matching of a new request and an existing request is not established by the matcher 130, the second processor 146 generates a smart contract SC including the new request by a program on the blockchain 300. Further, when the matching is established by the matcher 130, the second processor 146 adds information regarding the new request to the smart contract SC including the existing request as a matching partner.

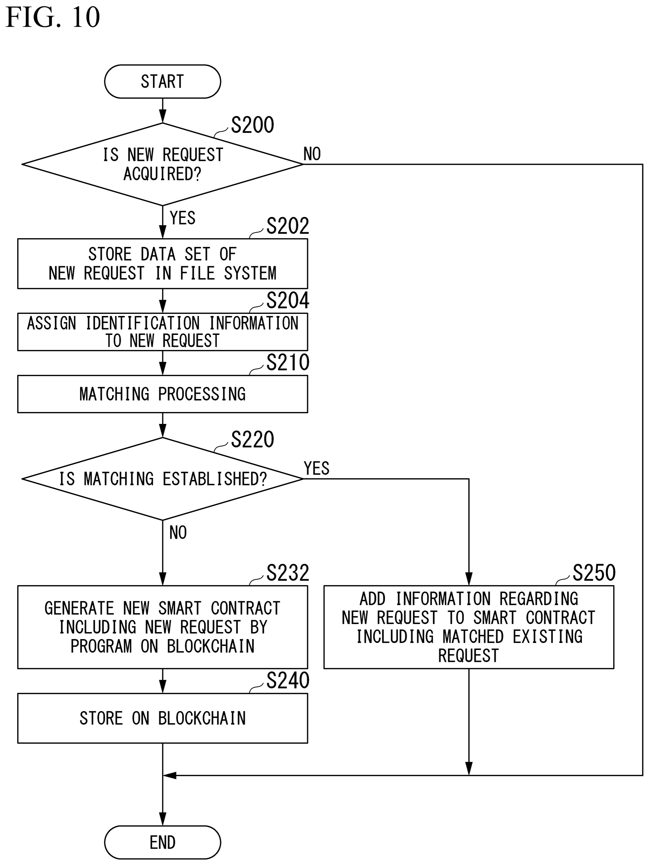

FIG. 10 is a flowchart illustrating an example of matching processing and generation processing of a smart contract SC in the second example. The processing of FIG. 10 is different from the processing of Steps S200 to S250 shown in FIG. 6 in that processing of Steps S202 and S204 is added and processing of Step S232 is provided instead of the processing of Step S230. Accordingly, hereinafter, description will be provided primarily focusing on the processing of Steps S202 to S204 and S232.

In the processing of Step S200 of FIG. 10, when determination is made that a new request is acquired, the first processor 142 stores a data set (data file) DS including the new request in the file system 400 (Step S202). Because the file system 400 is in a secure environment that is managed by the information management device 100, the new request that is stored in the data set DS may not be changed into a hash value. Next, the assigner 144 assigns identification information to the new request in the data set DS (Step S204). Accordingly, information of the CID is included in the data set DS. Then, in the matching processing of Step S210, the matcher 130 performs matching processing between an existing request that is included in the data set stored in the file system 400 and the new request.

In the processing of Step S220, when determination is made that the matching is not established (unestablished), the second processor 146 generates a smart contract including the new contract by executing the program on the blockchain 300 (Step S232), and stores the generated smart contract on the blockchain 300 (Step S240). The new request that is included in the smart contract may be changed into a hash value.

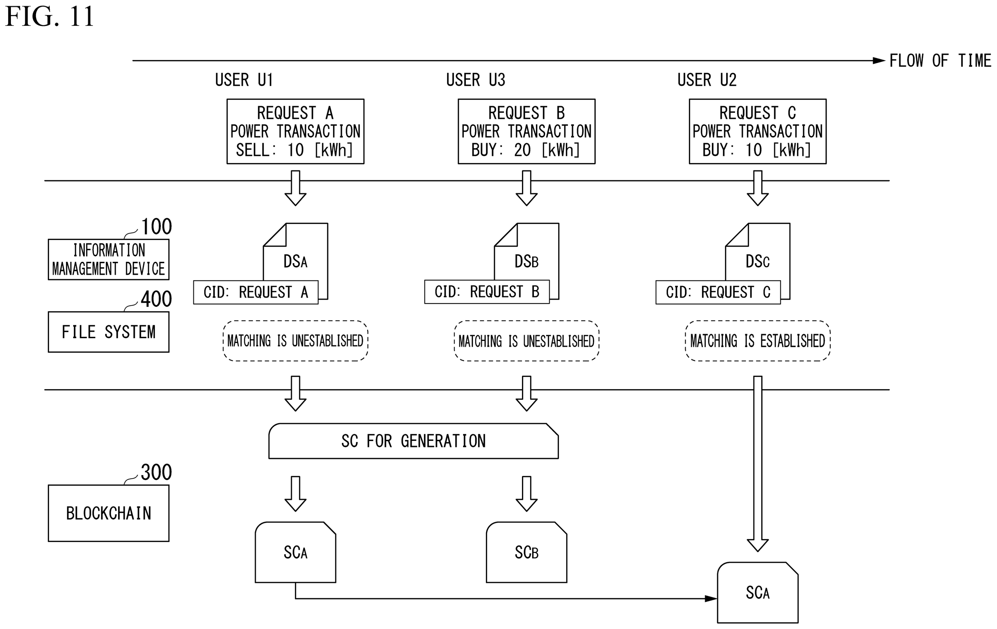

Next, the processing of the second example will be more specifically described. FIG. 11 is a diagram illustrating a request of each user U and a smart contract SC that is stored on the blockchain 300, in the second example. In the second example, when the request A of the user U1 is acquired, the first processor 142 stores a data set DS_{A} including the request A in the file system 400 as shown in FIG. 11. The assigner 144 assigns identification information (CID) to the request A in the data set DS_{A}.

The matcher 130 performs matching of the new request A and an existing request. When determination is made that the matching is unestablished, the second processor 146 outputs an instruction for generating a smart contract SC_{A} including the request A to another smart contract SC (hereinafter, referred to as "SC for generation") which is already stored on the blockchain 300 and in which the program for newly generating a smart contract SC is stored. The SC for generation executes the program on the basis of the instruction from the second processor 146 to generate the smart contract SC_{A} corresponding to the request A and store the generated smart contract SC_{A} on the blockchain 300.

In the example of FIG. 11, smart contracts SC_{A} and SC_{B} corresponding to the requests A and B unmatched with each other are generated by the SC for generation. In the second example, for example, at least one kind of information among information regarding the user U who generates the request, a transaction type (power buying, power selling, or the like), information regarding a token that is used (exchanged) after transaction completion, and information for referring to data (data set) stored in the file system 400 is included in the smart contracts SC_{A} and SC_{B} that are generated by the SC for generation. These kinds of information may be changed into a hash value. For example, in the second example, the user terminal 200 can inquire the data set DS to the information management device 100 using information for referring to data stored in the file system 400, and when the permission of the information management device 100 is obtained, can refer to the content of the data set DS.

Thereafter, in the example of FIG. 11, when the request C is acquired, the first processor 142 stores a data set DSc including the request C in the file system 400. The assigner 144 assigns the CID corresponding to the request C. Then, the matcher 130 performs matching the request A of the data set DS_{A} and the request B of the data set DS_{B} with the new request C, and determines that the matching of the requests A and C is established. For this reason, the second processor 146 adds information based on a matching result to the smart contract SC_{A} stored on the blockchain 300.

According to the second example described above, in addition to obtaining the same effects as in the first example, the matching processing can be performed while storing the request information stored in the file system (off-chain) 400 securer than the blockchain (on-chain) 300. Because the request information on the file system 400 is not changed into a hash value, the matching of the request information can be performed quickly and accurately. Further, according to the second example, by generating the smart contract SC using the program on the blockchain 300, a process of generating a block can be stored on the blockchain 300. In addition, it is easy for a third party to verify which smart contract SC that is generated by which program, and the transparency of the transaction process can be ensured.

In the second example, the processor 140 (second processor 146) may directly generate the smart contract SC on the blockchain 300 without using the SC for generation or the processor 140 may generate the SC for generation. The same applies to a third example described below.

### (Third Example)

Next, a third example will be described. The third example is different from the second example in that the identification information (CID) of the request described above is stored in the smart contract SC on the blockchain 300, and at the point of time when the user U approves the matching result, the matching result is added to the smart contract SC. Hereinafter, description will be provided mainly focusing on the differences. Also in the third example, respective processing may be executed by the configuration of the processor 140 similar to the second example.

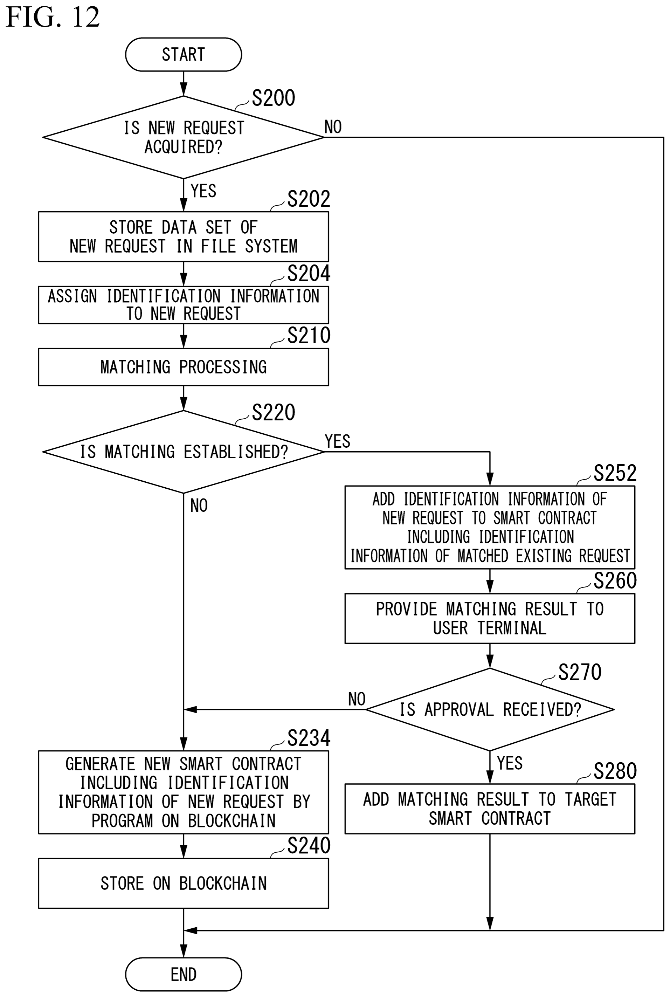

FIG. 12 is a flowchart illustrating an example of matching processing and generation processing of a smart contract SC in a third example. The processing of FIG. 12 is different from the processing of Steps S200 to S250 shown in FIG. 10 in that processing of Steps S234 and S252 is provided instead of the processing of Steps S232 and S250, and processing of Steps S260 to S280 is added. Accordingly, hereinafter, description will be provided mainly focusing on the processing of Steps S234, S252, and S260 to S280.

In the processing of Step S220 of FIG. 12, when determination is made that the matching is established, the second processor 146 generates a new smart contract SC including a CID (identification information) of a new request with the program (the program of the SC for generation) on the blockchain 300 (Step S234). Further, when determination is made that the matching is established, the second processor 146 adds the CID of the new request to a smart contract SC including a CID of an matched existing request (Step S252). The CID that is stored in the smart contract SC in the processing of Steps S234 and S252 may be changed into a hash value.

Next, the provider 160 generates information indicating a matching result and provides the generated information to the user terminal 200 that transmits the request as a matching target (Step S260). Next, the second processor 146 determines whether an approval is received from the user who performs the power transaction, from information acquired from the user terminal 200 (Step S270). When determination is made that the approval is received, information regarding the matching result is added to the target smart contract SC (Step S280). When determination is made that the approval is not received (for example, information indicating rejection is received), the processing after Step S234 is performed.

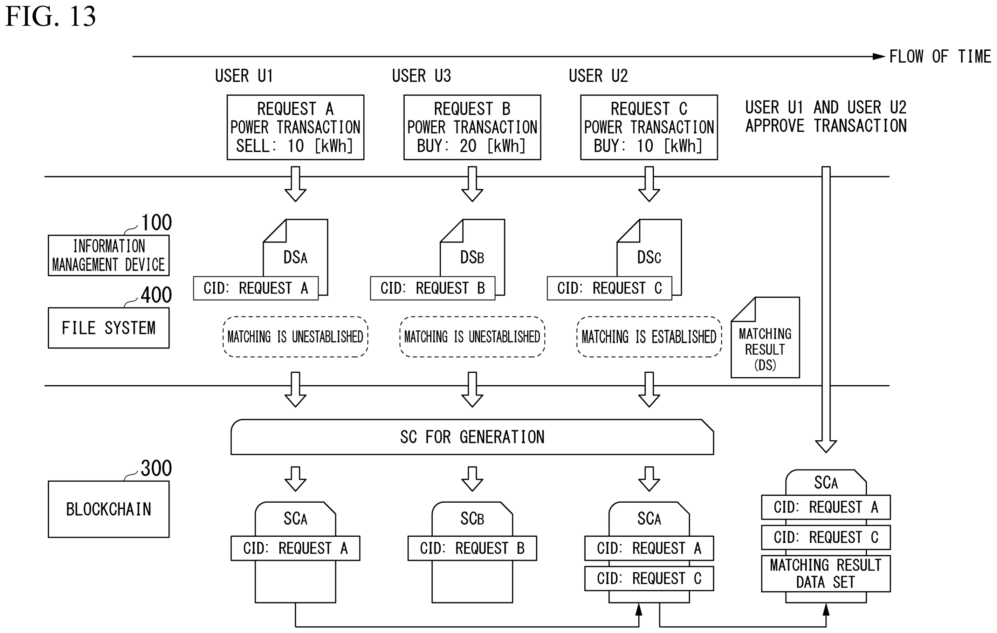

Next, the processing of the third example will be more specifically described. FIG. 13 is a diagram illustrating a request of each user U and a smart contract SC that is stored on the blockchain 300, in the third example. In the third example, the first processor 142 receives the request A of the user U1 and generates a data set DS_{A} including the request A in the file system 400. The assigner 144 assigns a CID to the request A in the data set DS_{A}. Further, when determination is made that the matching with the request A is unestablished by the matcher 130, the second processor 146 generates a smart contract SC_{A} including the CID allocated to the request A using the SC for generation. In the example of FIG. 13, similarly, the smart contract SC_{A} including the CID of the request A and a smart contract SC_{B} including a CID of the request B unmatched with each other are generated using the SC for generation. The CIDs that are stored in the smart contracts SC_{A} and SC_{B} may be changed into a hash value. By storing the CID in the smart contract SC in this way, it is possible to certify that the request information to be the base of a transaction condition is present outside the blockchain (on the off-chain), and as a result, the validity of the transaction can be ensured. Further, only the CID obtained by changing the request into a hash value is stored in the smart contract SC, so that the personal information of the user U can be protected. For example, when the user U wants to refer to the request information corresponding to the CID, the user terminal 200 inquires the request information corresponding to the CID to the information management device 100, and when the permission is obtained, the user U can refer to the request information.

The matching of the request C and the requests A and B stored in the data sets DS_{A} and DS_{B} of the file system 400 is performed by the matcher 130, and determination is made that the matching of the requests A and C is established. The second processor 146 adds the CID of the matched request C as information based on the matching result to the smart contract SC_{A} using the SC for generation at this point of time. The processor 140 adds the CID of the request C to the smart contract SC_{A} using the SC for generation similarly to the generation of the smart contracts SC_{A} and SC_{B}. In the program of the SC for generation of the third example, a program that adds the CID of the matched request to the existing smart contract SC is included.

Here, the provider 160 generates information (for example, image) regarding the matching result described above and provides the generated information to the user terminals 200-1 and 200-2. In the information to be provided, information indicating whether to approve a transaction based on the matching result may be included. The second processor 146 further adds information to the smart contract SC_{A} according to the presence or absence of the approval of the transaction received from the users U1 and U2. The above-described processing corresponds to the display of the matching result and the reception processing of Steps S122 and S124 shown in FIG. 4.

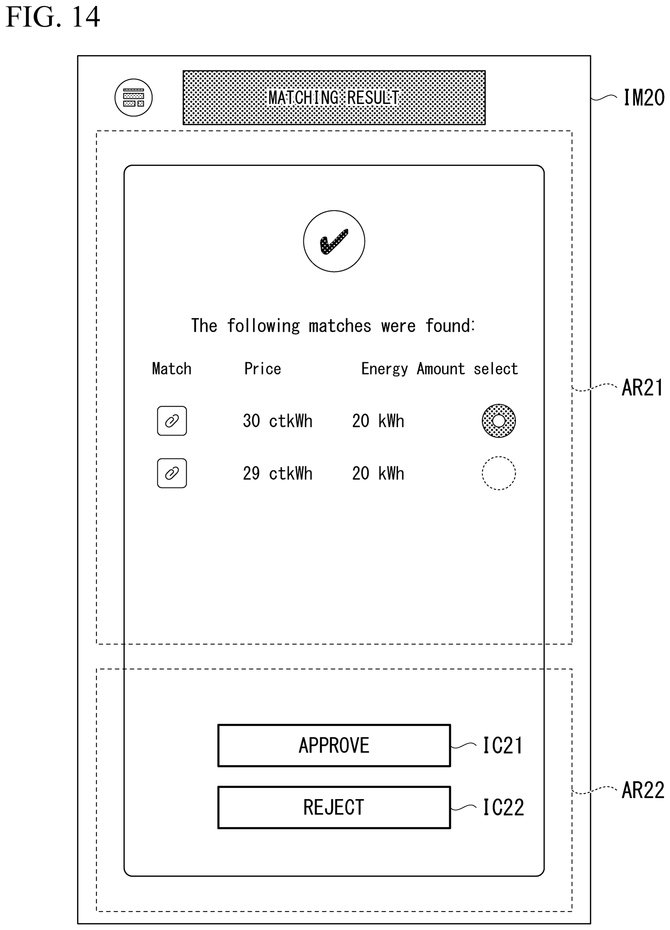

FIG. 14 is a diagram showing an image IM20 regarding a matching result. In the image IM20 shown in FIG. 14, for example, a matching result display area AR21 and a switch display area AR22 are included.

In the matching result display area AR21, information regarding the content of a result matching the condition of the request is displayed. In FIG. 14, as an example, a case where there are a plurality of pieces of matched information (requests) is shown. When a plurality of matching results are obtained, the content (for example, transaction price, transaction volume (power volume)) of each matching result is displayed, and a radio button (check box) for selecting any of a plurality of matched contents, and the like are displayed. The users U1 and U2 select any of a plurality of contents with the radio button of the image IM20. When the matching is unestablished by the matcher 130, information indicating the matching is unestablished may be displayed in the matching result display area AR21.

In the switching display area AR22, an icon IC21 that is a GUI switch for approving a transaction based on a matching result, and an icon IC22 for rejecting (not approving) a transaction are displayed. The user terminals 200-1 and 200-2 transmits information indicating approval of a transaction based on a matching result selected in the matching result display area AR21 to the information management device 100 when selection of the icon IC21 by the user U1 is received, and transmits information indicating rejection of a transaction based on a matching result to the information management device 100 when selection of the icon IC22 is received (processing of Steps S126 and S128 of FIG. 4).

Returning to FIG. 13, when both the users U1 and U2 approve the transaction, the processor 140 adds a data set of the matching result to the smart contract SC_{A} on the blockchain 300. In information (matching result data set) that is stored after the approval of the user U, for example, contract information (for example, power volume, transaction price, and added value rate) necessary for calculating a transaction price, and the like are included. The added value rate may be set, for example, on the basis of information regarding a market situation of a power transaction acquired from the outside by the processor 140, may be set on the basis of a service use situation of the user U, or may be freely set by a manager or the like of the transaction system 1. The matching result data set that is added to the smart contract SCA may be changed into a hash value.

In the third example, as shown in FIG. 13, the matcher 130 may store all matching results including matching and unmatching that have been performed in the file system 400, in the file system 400 in the form of a data set or the like. Further, the matcher 130 may store, in the file system 400, more detailed information (for example, the matched request information in addition to the above-described contract information) than the matching result data set to be added to the smart contract SC. As a result, a matching situation can be managed in more detail, and a data capacity that is added to the smart contract SC can be reduced. In addition, because information regarding the user is not included in the matching result data set that is added to the smart contract SC, the personal information of the user can be protected.

According to the third example described above, in addition to obtaining the same effects as in the first example, by storing only the CID associated with the request on the smart contract SC without storing information regarding the request in the smart contract SC, it is possible to certify that the request to be the base of a transaction condition is present on the off-chain (file system 400), and the validity of the transaction can be assured. In addition, because information regarding the request is not stored, the data volume on the blockchain 300 can be further reduced, and information management can be more accurately performed on the file system 400.

Each of the first to third examples described above may be combined with at least a part of other examples. For example, in the second example, the matcher 130 may store, in the file system 400, the matching result that has been performed in the file system 400, similarly to the third example.

### [Power Transaction Management Processing: Steps S132 to S144]

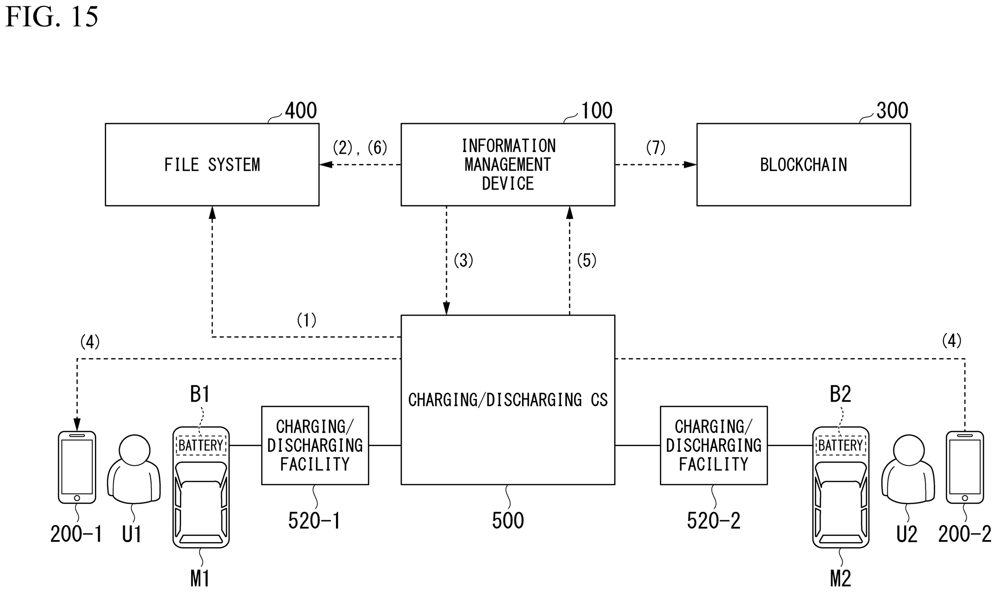

Next, the power transaction management processing of Steps S132 to S144 shown in FIG. 4 will be specifically described. FIG. 15 is a diagram illustrating processing regarding a power transaction. In FIG. 15, the charging/discharging CS 500, the information management device 100, and the file system 400 may perform transmission/reception and the like of data with a dedicated agent (user agent program) provided in each of the information management device 100 and the charging/discharging CS 500, for example. Data (transaction) that is transmitted and received between the devices may be transferred by a method, called a decentralized identifier (DID). The DID is a transfer framework that enables data exchange between the devices by replacing identification information that specifies personal information such as a user name, with a self-owned and independent ID that is not managed by a third party, and can ensure the protection of privacy or the safety of the transaction. In data transfer using the DID, for example, DID-Comm that is a P2P communication protocol is used. With the use of DID-Comm, decentralized data coordination can be performed in a state in which a degree of dependence on a device that manages the entire system is decreased. Further, by performing data transfer using DID-Comm, for example, the certification of qualification information (user information) of transmitted data can be verified. The communication protocol that is used in the embodiment is not limited to DID-Comm.

In FIG. 15, first, the charging/discharging CS 500 registers, in the file system 400, information regarding the DID that is used in transfer of information regarding a present power transaction ((1) of FIG. 15). The information management device 100 registers, in the file system 400, information regarding a DID or DID-Comm that is used in the charging/discharging CS 500 ((2) of FIG. 15). When the power transaction is approved by the users U1 and U2, the information management device 100 generates schedule information and the like of charging/discharging on the basis of a transaction serviceable time (start time, end time) of charging/discharging included in the requests A and C of the users U1 and U2, and transmits the generated schedule information or information regarding the users U1 and U2 to the charging/discharging CS 500 ((3) of FIG. 15).

The charging/discharging CS 500 generates information (for example, image) regarding a power transaction situation (contract state) on the basis of the schedule information and provides the generated information to the user terminals 200-1 and 200-2 ((4) of FIG. 15). The above-described information may be provided by the provider 160 of the information management device 100 instead of the charging/discharging CS 500.

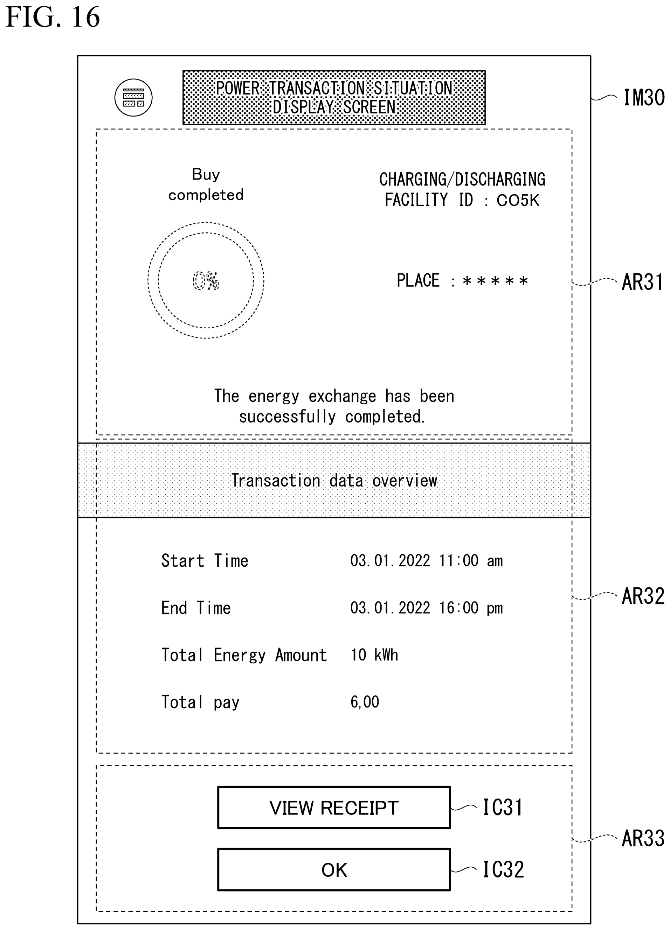

FIG. 16 is a diagram showing an example of an image IM30 regarding a power transaction situation. The image IM30 shown in FIG. 16 shows an example of an image that is displayed on the user terminal 200-2, which transmits a buying request of a side (buyer side) to buy power. In the example of FIG. 16, for example, a transaction situation display area AR31, a transaction outline display area AR32, and a switch display area AR33 are included in the image IM30. In the transaction situation display area AR31, information (for example, remaining charging capacity, remaining discharging capacity) indicating a buying state (or power selling state) of power and information regarding identification information (charging/discharging facility ID) and a place (installation position) of the charging/discharging facility 520 to which the electrified vehicle M is connected are displayed. Further, in the transaction situation display area AR31, information indicating that the power transaction is in progress or that the power transaction is completed may be displayed. In the transaction outline display area AR32, for example, information regarding the power transaction (transaction) such as a start time and an end time of charging (or discharging), a total power volume, and a total cost is displayed.

In the switch display area AR33, icons IC31 and IC32 that are GUI switches are included. The icon IC31 is a switch for receiving an instruction to display an electronic receipt after charging/discharging completion. The icon IC32 is a switch for ending the display of the image IM30. The transaction application 272 displays an image showing a receipt in the present power transaction on the display 232 when the icon IC31 is selected by the user U2, and ends the display of the image IM30 when the icon IC32 is selected.

The users U1 and U2 move the electrified vehicles M1 and M2 that the users U1 and U2 use, respectively, to the charging/discharging facility 520 that is managed by the charging/discharging CS 500, on the basis of place information displayed in the transaction situation display area AR31, and connect the electrified vehicles M1 and M2 to the charging/discharging facility 520 corresponding to the charging/discharging facility ID. The charging/discharging facility ID and the place information displayed in the transaction situation display area AR31 is, for example, an ID and place information of the charging/discharging facility 520 closest to the user terminal 200 extracted by the charging/discharging CS 500 or the information management device 100 on the basis of the position information of the user terminal 200. In the example of FIG. 15, the electrified vehicle M1 of the user U1 is connected to a charging/discharging facility 520-1, and the electrified vehicle M2 of the user U2 is connected to a charging/discharging facility 520-2.

The charging/discharging facilities 520-1 and 520-2 are connected to the electrified vehicles M1 and M2 to acquire the identification information (vehicle ID) of the electrified vehicles M1 and M2 and output the acquired vehicle ID to the charging/discharging CS 500. The charging/discharging CS 500 starts a charging/discharging session (a power transaction by charging/discharging) when the vehicle ID is a vehicle ID that is permitted (scheduled) to use the charging/discharging facility in advance, and transmits information (for example, charging/discharging information, charging/discharging result, and session end) regarding charging/discharging to the information management device 100 ((5) of FIG. 15). The information management device 100 stores a power transaction situation and the like in the file system 400 on the basis of information regarding charging/discharging ((6) of FIG. 15), and adds a power transaction result to the smart contract SC stored on the blockchain 300 after the power transaction ends (after charging/discharging is completed or after the session ends) ((7) of FIG. 15).

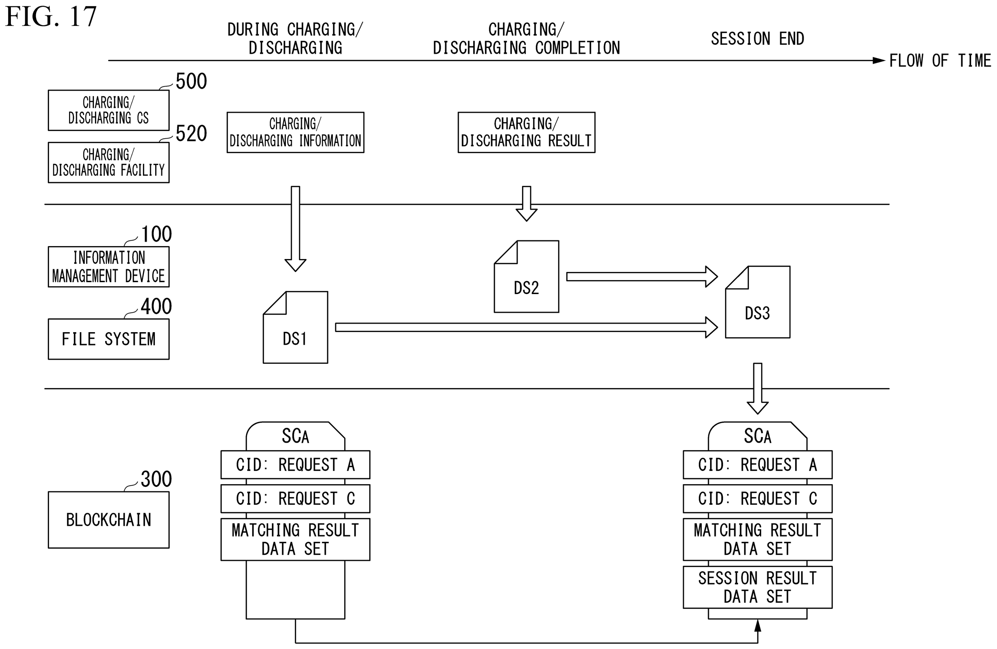

FIG. 17 is a diagram illustrating management of a transaction situation during a charging/discharging session. In an example of FIG. 17, it is assumed that the smart contract SC_{A} including the CID and the matching result data set corresponding to the matched requests A and C in the third example shown in FIG. 13 is stored on the blockchain 300 before the session of charging/discharging. Further, in the example of FIG. 17, management contents of transaction situations during charging/discharging, at the time of charging/discharging completion, and at the time of session end are shown. In the management of the transaction situation during the charging/discharging, the charging/discharging CS 500 transmits information (for example, charging/discharging information, charging/discharging result, and session end) regarding charging/discharging to the information management device 100. In the information management device 100, transaction management during charging/discharging session is performed on the basis of the transmitted information.

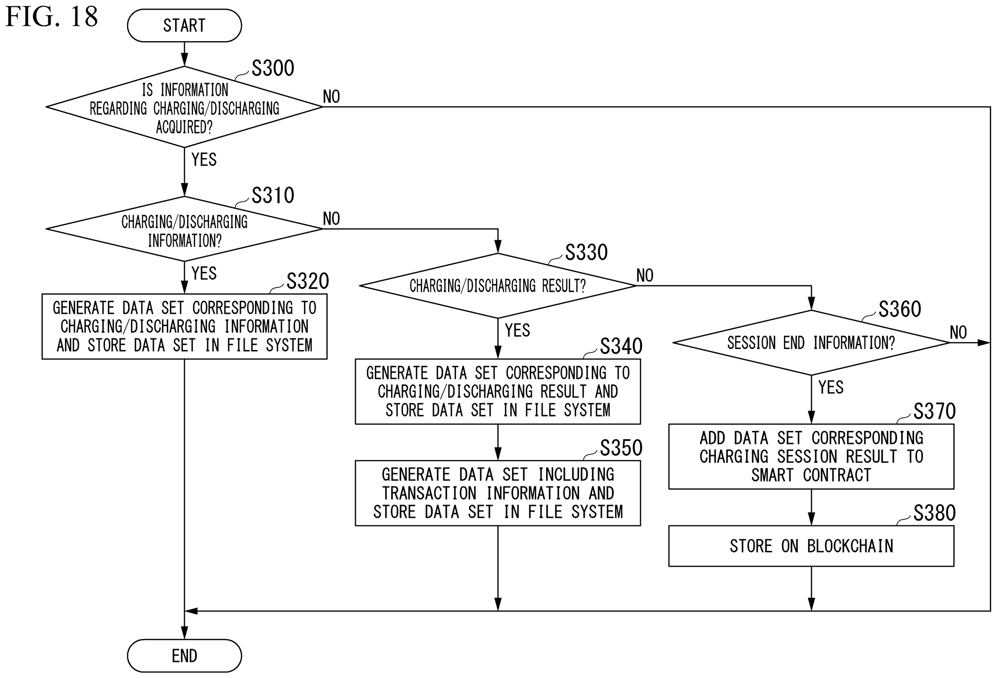

FIG. 18 is a flowchart illustrating an example of processing that is executed by the information management device 100 during a charging/discharging session. The processing of FIG. 18 may be repeatedly executed in a predetermined cycle or at a predetermined timing during the charging/discharging session. In the example of FIG. 18, the acquirer 120 of the information management device 100 determines whether information regarding charging/discharging is acquired from the charging/discharging CS 500 (or the charging/discharging facilities 520-1 and 520-2) (Step S300).

When determination is made that information regarding charging/discharging is acquired, the acquirer 120 determines whether the acquired information is charging information (Step S310). When determination is made that the acquired information is charging information, the processor 140 (first processor 142) generates a data set DS1 corresponding to the charging information as shown in FIG. 13 and stores the generated data set DS1 in the file system 400 (Step S320). In the data set DS1, for example, the charging/discharging facility ID, the charging/discharging time (time stamp), the user information, the vehicle ID, and information regarding a discharging power volume (or charging power volume) are included. In the data set DS1, information such as identification information (battery ID) of the battery B (charging/discharging target equipment) and a power volume and a state of charge (SOC) of the battery B may be included.

In the processing of Step S320, when the data set DS1 is already present in the file system 400, a changed portion of the data set DS1 may be updated or the stored past data set DS1 may be deleted and the new data set DS1 may be stored in the file system 400. In the data set DS1, information of both the charging side and the discharging side may be included or each piece of information may be stored as a separate data set.

In the processing of Step S310, when determination is made that the acquired information is not charging information, the acquirer 120 determines whether the acquired information regarding charging/discharging is a charging/discharging result that is transmitted at the time of charging completion (Step S330). When determination is made that the acquired information is a charging/discharging result, the processor 140 generates a data set DS2 indicating the charging/discharging result as shown in FIG. 17, and stores the generated data set DS2 in the file system 400 (Step S340). In the data set DS2, in addition to the same information as in the data set DS1, information indicating a transaction completion state or information such as a total charging (or discharging) capacity in the session is included.

The processor 140 calculates a final transaction amount on the basis of the data set DS1 of the charging/discharging information, the data set DS2 of the charging/discharging result, and the contract information (for example, transaction price, added value rate) included in the matching result data set, and generates a data set DS3 including transaction information such as the calculated transaction amount or the transaction volume (Step S350). In the transaction information, for example, information indicating whether the transaction is completed may be included. Further, in the data set DS3, in addition to the transaction information, session information (information that is obtained during communication) is stored. In the session information, for example, at least one kind of information among the identification information (charging/discharging ID) for identifying the charging/discharging facility 520, the identification information (CID) of the request to be the base of the transaction, the identification information (user ID) of the user who consumes (supplies) power, the charging/discharging start time, the charging/discharging end time, a battery power volume when the session starts, a battery power volume when the session ends, a battery SOC when the session starts, a battery SOC when the session ends, and a total charging/discharging power volume in the session is included.

In the processing of Step S330, when determination is made that information regarding discharging is not a charging/discharging result, the acquirer 120 determines whether the acquired information regarding charging/discharging is session end information (Step S360). When determination is made that the acquired information is session end information, the second processor 146 adds a data set (for example, at least a part of the content of the data set DS3) corresponding to a charging session result (power transaction result) to the smart contract SC_{A} stored on the blockchain 300 (Step S370), and stores the smart contract on the blockchain 300 (Step S380). The second processor 146 changes the session information included in the data set (power transaction result) to be added to the smart contract SC_{A} into a hash value, and adds the transaction information to the smart contract SC_{A} without being changed into a hash value. The second processor 146 may add information (status information) to be the certification of the end of charging/discharging to the smart contract SC_{A}. As a result, the processing of the flowchart shown in FIG. 18 ends. In the processing of Step S300, when determination is made that information regarding charging/discharging is not acquired, the processing of this flowchart ends.

In this way, by changing the session information including the identification information of the user into a hash value and storing the session information on the blockchain 300 in a state in which the content of data is not known, the privacy information and the like of the user U can be protected. In addition, by storing information necessary for calculating a final payment amount such as the transaction amount and the transaction volume or information (that is, information that is not privacy information) for confirming the completion of the transaction on the blockchain 300 without changing into a hash value, the final payment amount can be correctly and quickly calculated. Because the CID or the matching result data set corresponding to the request A is included in the above-described smart contract SC_{A}, the request information and the like can be acquired from the file system 400 or the like using these kinds of information.

### [Modifications]

The information management device 100 in the transaction system 1 of the embodiment may be one of nodes that configure the blockchain 300 (blockchain network) or may be one of nodes that configure the file system 400 (IPFS network). In other words, the information management device 100 may be configured integrally with the blockchain 300 or may be configured integrally with the file system 400. The information management device 100 may be configured integrally with the charging/discharging CS 500. A part (for example, the function of the matcher 130, the register 150, or the provider 160) of the functions included in the information management device 100 may be executed by a program (dedicated smart contract) stored in advance on the blockchain 300.

In the embodiment, although the transaction regarding power of the electrified vehicle M (more specifically, the battery B) that the user U owns has been described, in addition to (instead of) power from the electrified vehicle M, power that is obtained by a solar photovoltaic power generation, wind power generation, hydroelectric power generation, thermal power generation, geothermal power generation, or the like may be used.

According to the embodiment described above, the information management device 100 that mediates a transaction between users and manages a transaction result by storing a smart contract regarding the transaction on the blockchain 300 includes the acquirer 120 that acquires a request regarding buying or selling received from a user, the matcher 130 that performs matching between a new request newly acquired by the acquirer 120 and an existing request included in a smart contract already stored on the blockchain 300, and the processor 140 that generates a smart contract including the new request on the blockchain 300 when the matching is not established, and add, when the matching is established, information regarding the new request to a smart contract including the matched existing request. Accordingly, it is possible to more accurately manage information while reducing a data volume that is stored on the blockchain 300.

More specifically, according to the embodiment, only when matching is not established, a smart contract is newly generated, and when matching is established, the status of the existing smart contract of the matching partner is changed. For this reason, it is possible to reduce the number of smart contracts. Further, according to the embodiment, it is possible to reduce the data capacity on the blockchain and an operation cost (= transaction cost), and to suppress decrease in processing speed in the transaction system 1.

According to the embodiment, information regarding the request that is stored on the blockchain 300 is changed into a hash value, so that it is possible to further protect the request information. Further, according to the embodiment, by generating the smart contract using the program on the blockchain, it is possible to record a process of generating a transaction on the blockchain, and to ensure the transparency of the transaction process. In addition, according to the embodiment, it is possible to suppress a time lag between an actual transaction situation and information that is managed in the blockchain 300 or the file system 400, and to more accurately mange each piece of information.

The above-described embodiment can be expressed as follows.

An information management device including
a storage medium that stores computer-readable instructions of an information management device, which mediates a transaction between users and manages a transaction result by storing a smart contract regarding the transaction on a blockchain, and
a processor connected to the storage medium,
in which the processor executes the computer-readable instructions to acquire a request regarding buying or selling received from a user,
perform matching between a new request newly acquired and an existing request included in a smart contract already stored on the blockchain,
generate a smart contract including the new request on the blockchain when the matching is not established, and
add, when the matching is established, information regarding the new request to a smart contract including the matched existing request.

Although the mode for carrying out the present invention has been described using the embodiment, the present invention is not limited to the embodiment, and various modifications and substitutions can be made without departing from the spirit or scope of the present invention.

### REFERENCE SIGNS LIST

1 Transaction system
100 Information management device
110 Communicator
120 Acquirer
130 Matcher
140 Processor
142 First processor
144 Assigner
146 Second processor
150 Register
160 Provider
170 Device-side storage
200 User terminal
210 Terminal-side communicator
220 Input
230 Output
232 Display
234 Speaker
240 Position information acquirer
250 Controller
260 Application executor
270 Terminal-side storage
300 Blockchain
400 File system
500 Charging/discharging CS
520 Charging/discharging facility
M Electrified vehicle

## Claims

1. An information management device that mediates a transaction between users and manages a transaction result by storing a smart contract regarding the transaction on a blockchain, the information management device comprising:
an acquirer configured to acquire a request regarding buying or selling received from a user;
a matcher configured to perform matching between a new request newly acquired by the acquirer and an existing request included in a smart contract already stored on the blockchain; and
a processor configured to generate a smart contract including the new request on the blockchain when the matching is not established, and add, when the matching is established, information regarding the new request to a smart contract including the matched existing request.

2. The information management device according to claim 1,
wherein the processor generates a smart contract including information regarding the new request changed into a hash value.

3. The information management device according to claim 1,
wherein the processor generates the smart contract including the new request by a program stored in advance on the blockchain.

4. The information management device according to claim 3,
wherein the blockchain is Ethereum.

5. The information management device according to claim 1,
wherein the transaction includes a power transaction,
the request includes a request regarding buying or selling of power, and
the processor adds a power transaction result for the request to the smart contract.

6. The information management device according to claim 1,
wherein the smart contract includes at least one of information regarding the user, a transaction type, information regarding a token that is exchanged after transaction completion, and information for referring to information regarding the request that is recorded in a storage outside the blockchain.

7. The information management device according to claim 1,
wherein the processor stores session information in the transaction between the users on the blockchain while changing into a hash value, and stores transaction information regarding a transaction amount and a transaction volume on the blockchain without changing into a hash value.

8. An information management method comprising:
by an information management device that mediates a transaction between users and manages a transaction result by storing a smart contract regarding the transaction on a blockchain,
acquiring a request regarding buying or selling received from a user;
performing matching between a new request newly acquired and an existing request included in a smart contract already stored on the blockchain;
generating a smart contract including the new request on the blockchain when the matching is not established; and
adding, when the matching is established, information regarding the new request to a smart contract including the matched existing request.

9. A program causing an information management device, which mediates a transaction between users and manages a transaction result by storing a smart contract regarding the transaction on a blockchain, to:
acquire a request regarding buying or selling received from a user;
perform matching between a new request newly acquired and an existing request included in a smart contract already stored on the blockchain;
generate a smart contract including the new request on the blockchain when the matching is not established; and
add, when the matching is established, information regarding the new request to a smart contract including the matched existing request.
